# EUROPÄISCHE PATENTSCHRIFT

(11) **EP 2 689 132 B1**
(45) Veröffentlichungstag und Bekanntmachung des Hinweises auf die Patenterteilung: **06.05.2015**
(21) Anmeldenummer: 12702815.7
(22) Anmeldetag: 02.02.2012
(51) Int. Cl.: F04B 1/32, F04B 1/29, F15B 13/04

(54) **STELLVORRICHTUNG EINES HYDROSTATMODULS**
ADJUSTING DEVICE OF A HYDROSTATIC MODULE
DISPOSITIF DE RÉGLAGE D'UN MODULE D'HYDROSTAT

(30) Priorität: 25.03.2011 DE 102011006102
(43) Veröffentlichungstag der Anmeldung: 29.01.2014
(73) Patentinhaber: ZF Friedrichshafen AG, 88038 Friedrichshafen (DE)
(72) Erfinder: BREHMER, Udo, 78464 Konstanz (DE); SCHRAFF, Bernd, 88048 Friedrichshafen (DE); REHTANZ, Roland, 88069 Tettnang (DE)
(86) Internationale Anmeldenummer: PCT/EP2012/051765
(87) Internationale Veröffentlichungsnummer: WO 2012/130505

(56) Entgegenhaltungen:
- DE-A1-102008 002 140
- DE-A1-102008 031 768
- DE-B4- 10 043 451
- DE-C2- 19 653 165

## Beschreibung

Die Erfindung betrifft eine Stellvorrichtung eines Hydrostatmoduls, das mindestens eine über die Verschwenkung eines Jochs in ihrem Verdrängungsvolumen verstellbare Axialkolbenmaschine umfasst, mit einem radial beabstandet und tangential zu der Schwenkachse des Jochs angeordneten hydraulischen Stellzylinder mit einem Stellkolben, der über einen Schwenkhebel mit dem Joch in Wirkverbindung steht und an zwei entgegengerichteten Kolbenflächen mit einer Stelldruckdifferenz eines hydraulischen Druckmittels beaufschlagbar ist, und mit einer Steuerungsanordnung, die ein als elektromagnetisch steuerbares hydraulisches Proportionalventil ausgebildetes Positionsregelventil mit einem Steuerkolben aufweist, durch dessen Axialstellung die an dem Stellkolben des Stellzylinders anliegende Stelldruckdifferenz einstellbar ist, und mit einer kraftschlüssigen mechanischen Rückführeinrichtung, über welche die Schwenklage des Jochs auf den Steuerkolben des Positionsregelventils übertragbar ist.

Bekannte Bauarten einer hydrostatischen Axialkolbenmaschine sind die Schrägachsenmaschine und die Schrägscheibenmaschine. Derartige Axialkolbenmaschinen können mit weitgehend identischem Aufbau jeweils als Hydrostatpumpe oder als Hydrostatmotor eingesetzt werden. Bei einer Schrägachsenmaschine ist ein Triebflansch starr mit der zugeordneten Triebwelle verbunden. An dem Triebflansch sind umfangsseitig gleichverteilt die Kolbenstangen mehrerer Verdrängerkolben gelenkig gelagert. Die Verdrängerkolben sind jeweils in einer von mehreren entsprechend umfangsseitig verteilt in einem Zylinderblock angeordneten axialen Zylinderbohrungen angeordnet. Der Zylinderblock steht, z.B. über eine zentrale Kardanwelle, in Triebverbindung mit der Triebwelle und ist drehbar um seine Drehachse in einem Joch gelagert, durch dessen Verschwenkung um eine senkrecht zu der Mittelachse der Triebwelle verlaufende Schwenkachse das Verdrängungsvolumen der Schrägachsenmaschine veränderbar bzw. einstellbar ist. Der Schwenkwinkelbereich einer Schrägachsenmaschine liegt bei einseitiger Verstellung bei 45 ° (+/- 5 °) und bei doppelseitiger Verstellung, d.h. mit Drehrichtungsumkehr, bei +/- 45° (+/- 5°).

Bei einer Schrägscheibenmaschine ist ein Zylinderblock mit mehreren umfangsseitig verteilt angeordneten axialen Zylinderbohrungen starr mit der zugeordneten Triebwelle verbunden. In den Zylinderbohrungen ist jeweils ein Verdrängerkolben angeordnet, dessen Kolbenstange über einen Gleitschuh mit einer axial benachbarten Schrägscheibe in Gleitkontakt steht. Die Schrägscheibe ist starr oder einstückig mit einem Joch verbunden, durch dessen Verschwenkung um eine senkrecht zu der Drehachse der Triebwelle verlaufende Schwenkachse das Verdrängungsvolumen der Schrägscheibenmaschine veränderbar bzw. einstellbar ist. Der Schwenkwinkelbereich einer Schrägscheibenmaschine liegt bei einseitiger Verstellung bei 20° (+/- 5°) und bei doppelseitiger Verstellung, d.h. mit Drehrichtungsumkehr, bei +/- 20° (+/- 5°).

Beispielsweise ist in der DE 10 2008 002 140 A1 mit Bezug auf die DE 10 2006 025 347 B3 ein Hydrostatmodul beschrieben, das zwei hydraulisch miteinander gekoppelte Schrägachsenmaschinen umfasst, deren Zylinderblöcke bezüglich einer gemeinsamen Schwenkachse versetzt zueinander in einem schwenkbaren Joch angeordnet sind. Die eine Schrägachsenmaschine ist als eine Hydrostatpumpe wirksam und über die zugeordnete Triebwelle von einem Antriebsmotor antreibbar. Die andere Schrägachsenmaschine ist als ein Hydrostatmotor wirksam und kann über die zugeordnete Triebwelle ein Drehmoment an einen Verbraucher abgeben. Aufgrund der versetzten Anordnung der Zylinderblöcke wird bei einer Verschwenkung des Jochs aus einer neutralen Ruhelage das Verdrängungsvolumen der Hydrostatpumpe erhöht und das Verdrängungsvolumen des Hydrostatmotors in demselben Umfang verringert. Das Hydrostatmodul bildet somit ein stufenlos verstellbares hydrostatisches Getriebe, das beispielsweise in Radladern als alleiniges Fahrgetriebe und in Ackerschleppern in Verbindung mit einem parallel angeordneten Schaltgetriebe in einem leistungsverzweigten Fahrgetriebe zur Anwendung kommen kann.

Die Stellvorrichtung des aus der DE 10 2008 002 140 A1 bekannten Hydrostatmoduls, mit der das Joch um seine Schwenkachse verschwenkbar und damit die Übersetzung des hydrostatischen Getriebes verstellbar ist, umfasst einen axial mittig zwischen den beiden Schrägachsenmaschinen in einer die Lagerungen des Jochs aufnehmenden Grundplatte radial beabstandet und tangential zu der Schwenkachse des Jochs angeordneten hydraulischen Stellzylinder mit einem Stellkolben. Der Steilkolben steht über einen radial zu der Schwenkachse des Jochs ausgerichteten, starr mit dem Joch verbundenen und über einen Kugelkopf in einer Radialbohrung des Stellkolbens gleit- und drehbeweglich gelagerten Schwenkhebel mit dem Joch in Wirkverbindung. Somit bewirkt eine Axialverschiebung des Stellkolbens eine Verschwenkung des Jochs um seine Schwenkachse und damit eine Verstellung des Verdrängungsvolumens der beiden Schrägachsenmaschinen. Zur Axialverschiebung des Stellkolbens ist dieser über eine nicht näher dargestellte Ventilanordnung an zwei entgegengerichteten Kolbenflächen mit einer Stelldruckdifferenz eines hydraulischen Druckmittels beaufschlagbar.

Im Gegensatz zu anderen möglichen Ventilanordnungen zur Ansteuerung des Stellzylinders geht die vorliegende Erfindung von einer relativ einfach aufgebauten Steuerungsanordnung aus, die ein als elektromagnetisch ansteuerbares Hydraulik-Proportionalventil ausgebildetes Positionsregelventil mit einem Steuerkolben, durch dessen Axialstellung die an dem Stellkolben des Stellzylinders anliegende Stelldruckdifferenz einstellbar ist, und eine kraftschlüssige mechanische Rückführeinrichtung, über welche die Schwenklage des Jochs auf den Steuerkolben des Positionsregelventils übertragbar ist, umfasst.

Aus der US 5,205,201 A ist eine derartige Steuerungsanordnung mit einem druckgesteuerten Positionsregelventil bekannt, das achsparallel zu dem Stellzylinder angeordnet ist und über eine kraftschlüssige mechanische Rückführeinrichtung mit dem Stellkolben des Stellzylinders in Wirkverbindung steht. Die Rückführeinrichtung umfasst ein Gestänge, eine Hülse und eine als Schraubenfeder ausgebildete Rückkopplungsfeder. Die Hülse ist innerhalb des Ventilgehäuses des Positionsregelventils in einem erweiterten Druckraum koaxial über der Rückkopplungsfeder sowie einem verlängerten Abschnitt des Steuerkolbens angeordnet und steht einerseits über ein Gestänge mit dem Stellkolben des Stellzylinders und andererseits über die Rückkopplungsfeder mit dem Steuerkolben des Positionsregelventils in Verbindung.

In der DE 196 53 165 C2, welche als nächstliegender Stand der Technik betrachtet wird, ist eine derartige Steuerungsanordnung mit einem elektromagnetisch steuerbaren Positionsregelventil beschrieben, das koaxial und axial benachbart zu dem Stellzylinder angeordnet ist und über eine kraftschlüssige mechanische Rückführeinrichtung mit dem Stellkolben des Stellzylinders in Wirkverbindung steht. Die Rückführeinrichtung umfasst eine als Schraubenfeder ausgebildete Rückkopplungsfeder, die innerhalb des Stellzylinders zwischen dem Stellkolben und dem Steuerkolben des benachbarten Positionsregelventils angeordnet ist.

Schließlich ist aus der DE 101 38 554 C1 eine derartige Steuerungsanordnung mit zwei druckgesteuerten oder elektromagnetisch steuerbaren Positionsregelventilen bekannt, die außermittig mit radialer Ausrichtung benachbart zu dem Stellzylinder angeordnet sind und über jeweils eine kraftschlüssige mechanische Rückführeinrichtung mit dem Stellkolben des Stellzylinders in Wirkverbindung stehen. Die Rückführeinrichtung umfasst jeweils einen an einem außermittigen kegeligen Abschnitt des Stellkolbens anliegenden Tastkolben und eine zwischen dem betreffenden Tastkolben und dem Steuerkolben des zugeordneten Positionsregelventils angeordnete Rückkopplungsfeder.

Bei den bekannten Steuerungsanordnungen wird über die Rückführeinrichtung nicht unmittelbar die Schwenkposition des betreffenden Hydrostatmoduls sondern die Stellposition des mit dem Joch in Wirkverbindung stehenden Stellkolbens des Stellzylinders auf den Steuerkolben des zugeordneten Positionsregelventils übertragen. Hierdurch wird ein in der Stellverbindung zwischen dem Stellkolben des Stellzylinders und dem Joch unvermeidbar vorhandenes Leerspiel nicht erfasst, was zu einer gewissen Ungenauigkeit bei der Positionsregelung des Jochs führt. Ebenso wird hierdurch die progressive Übersetzung der Stellverbindung zwischen dem Stellkolben des Stellzylinders und dem Joch nicht erfasst, die sich in einer bei zunehmender Auslenkung des Stellkolbens ansteigenden Änderungsrate des Schwenkwinkels des Jochs äußert, was zwangsläufig zu einer mit zunehmendem Schwenkwinkel des Jochs ansteigenden Ungenauigkeit der Positionsregelung des Jochs führt.

Der vorliegenden Erfindung liegt daher die Aufgabe zugrunde, eine Stellvorrichtung eines Hydrostatmoduls der eingangs genannten Art vorzuschlagen, deren Steuerungsanordnung bei möglichst einfachem Aufbau eine erhöhte Genauigkeit bei der Positionsregelung des Jochs aufweist.

Diese Aufgabe ist durch eine Stellvorrichtung mit den Merkmalen des Hauptanspruchs gelöst. Vorteilhafte Ausgestaltungen und Weiterbildungen sind den Unteransprüchen entnehmbar.

Demnach geht die Erfindung aus von einer Stellvorrichtung eines Hydrostatmoduls, das mindestens eine über die Verschwenkung eines Jochs in ihrem Verdrängungsvolumen verstellbare Axialkolbenmaschine umfasst. Die Stellvorrichtung weist einen radial beabstandet und tangential zu der Schwenkachse des Jochs angeordneten Stellzylinder mit einem Stellkolben auf, der über einen Schwenkhebel mit dem Joch in Wirkverbindung steht und an zwei entgegengerichteten Kolbenflächen mit einer Stelldruckdifferenz eines hydraulischen Druckmittels beaufschlagbar ist. Eine zugeordnete Steuerungsanordnung umfasst ein als elektromagnetisch steuerbares hydraulisches Proportionalventil ausgebildetes Positionsregelventil mit einem Steuerkolben, durch dessen Axialstellung die an dem Stellkolben des Stellzylinders anliegende Stelldruckdifferenz einstellbar ist, und eine kraftschlüssige mechanische Rückführeinrichtung, über welche die Schwenklage des Jochs auf den Steuerkolben des Positionsregelventils übertragbar ist.

Gemäß der Erfindung ist das Positionsregelventil achsparallel zu dem Stellzylinder und radial beabstandet zu der Schwenkachse des Jochs angeordnet. Die Rückführeinrichtung umfasst einen axialbeweglich geführten Tastkolben und eine als Schraubenfeder ausgebildete Rückkopplungsfeder, die koaxial und axial benachbart zu dem Positionsregelventil angeordnet sind. Der Tastkolben liegt an einer exzentrisch zu der Schwenkachse an dem Joch angeordneten Rückkopplungsfläche an und steht über die Rückkopplungsfeder mit dem Steuerkolben des Positionsregelventils in Wirkverbindung.

Diese Steuerungsanordnung ist einfach sowie Platz sparend aufgebaut und erfüllt die gestellte Aufgabe einer unmittelbaren kraftschlüssigen Rückführung der Schwenkposition des Jochs auf den Stellkolben des Positionsregelventils. Die in den bekannten Steuerungsanordnungen durch die Rückführung der Stellposition des Stellkolbens des Stellzylinders gegebene Ungenauigkeit der Positionsregelung des Jochs ist damit vergleichsweise einfach und zugleich effektiv beseitigt.

Zur Erzielung einer genauen, die Schwenkposition des Jochs in gewünschter Weise, d.h. progressiv, linear oder degressiv übertragenden Rückführung auf das Positionssteuerventil ist die Kontur der Rückkopplungsfläche bevorzugt konvex ausgebildet und an die gewünschte Steuerungscharakteristik der Positionsregelung des Jochs angepasst.

Um die Steuerungscharakteristik der Positionsregelung auf einfache Weise ändern bzw. an den jeweiligen Anwendungsfall anpassen zu können, ist die Rückkopplungsfläche vorteilhaft an einem demontierbar an dem Joch befestigten Bauteil angeordnet. Zur Änderung der Steuerungscharakteristik muss dann nur das vorhandene Bauteil durch ein Bauteil mit einer anderen Kontur der Rückkopplungsfläche ersetzt werden. Gegebenenfalls kann hierbei auch ein Austausch der Rückkopplungsfeder gegen ein Exemplar mit anderer Länge und/oder Federsteifigkeit erforderlich sein.

Der Tastkolben kann über eine an seinem äußeren Ende angeordnete ebene Gleitfläche gleitbeweglich mit der Rückkopplungsfläche des Jochs in Kontakt stehen.

Zur Erzielung einer möglichst reibungsarmen und damit besonders genauen Rückführung der Schwenkposition des Jochs kann jedoch auch vorgesehen sein, dass der Tastkolben über eine an seinem äußeren Ende in einer Kalotte drehbar gelagerte Kugel wälzbeweglich oder über eine an seinem äußeren Ende um eine achsparallel zu der Schwenkachse des Jochs ausgerichtete Achse drehbar gelagerte Rolle rollbeweglich mit der Rückkopplungsfläche des Jochs in Kontakt steht.

Für eine möglichst reibungsarme und zugleich zentrische Führung der Rückkopplungsfeder ist diese bevorzugt einerseits in einer zentralen Sackbohrung des Tastkolbens und andererseits auf einem an dem Steuerkolben des Positionsregelventils zentriert angeordneten Federteller geführt.

Der Tastkolben ist zweckmäßig axial gleitbeweglich in einer Bohrung eines gehäusefesten Bauteils geführt.

Wenn das Positionsregelventil, wie es vorliegend bevorzugt vorgesehen ist, in Cartridge-Bauweise ausgeführt ist, kann auch dieses in einer Bohrung eines gehäusefesten Bauteils angeordnet sein.

Somit ist es möglich, dass der Tastkolben, die Rückkopplungsfeder und das Positionsregelventil in einer abgestuften Bohrung einer die Lagerungen des Jochs aufnehmenden Grundplatte des Hydrostatmoduls, d.h. in einer gemeinsamen Bohrung eines einzigen gehäusefesten Bauteils, angeordnet werden, was besonders kostengünstig und Platz sparend realisierbar ist.

Zur Verdeutlichung der Erfindung ist der Beschreibung eine Zeichnung mit Ausführungsbeispielen beigefügt. In dieser zeigt
- Fig. 1: eine erfindungsgemäße Steuerungsanordnung eines Hydrostatmoduls in einer Schnittansicht,
- Fig. 2: eine erste Weiterbildung der erfindungsgemäßen Steuerungsanordnung nach Fig. 1 in einer Schnittansicht, und
- Fig. 3: eine zweite Weiterbildung der erfindungsgemäßen Steuerungsanordnung nach Fig. 1 in einer Schnittansicht.

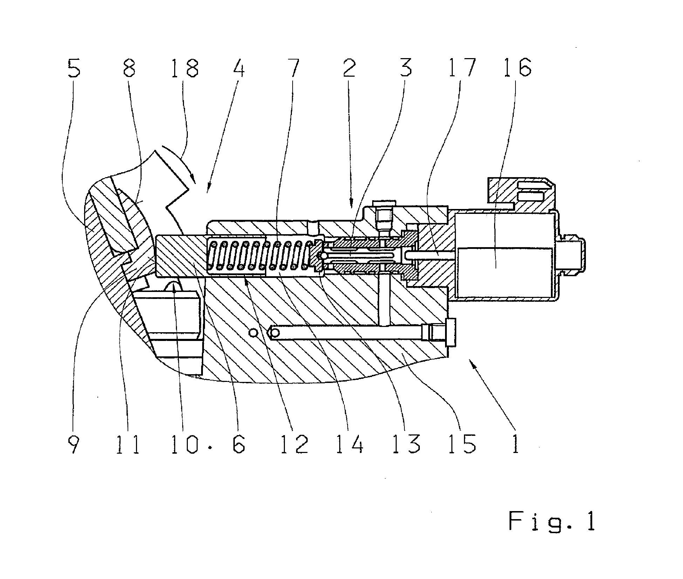

In Fig. 1 bis Fig. 3 ist jeweils eine erfindungsgemäße Steuerungsanordnung 1, 1', 1 * abgebildet, die zur Ansteuerung eines nicht näher dargestellten hydraulischen Stellzylinders dient, der radial beabstandet und tangential zu der Schwenkachse eines Jochs 5 eines Hydrostatmoduls angeordnet ist und über einen Schwenkhebel mit dem Joch 5 in Wirkverbindung steht. Durch die Verschwenkung des Jochs 5 durch den Stellzylinder wird mindestens eine Axialkolbenmaschine in ihrem Verdrängungsvolumen verstellt. Zum besseren Verständnis kann beispielsweise von einem in der DE 10 2008 002 140 A1 beschriebenen Aufbau des Hydrostatmoduls ausgegangen werden, das zwei hydraulisch miteinander gekoppelte Schrägachsenmaschinen umfasst. Die Zylinderblöcke dieser beiden Schrägachsenmaschinen sind bezüglich einer gemeinsamen Schwenkachse versetzt zueinander in dem schwenkbaren Joch 5 angeordnet. Die eine Schrägachsenmaschine ist als eine Hydrostatpumpe wirksam, und die andere Schrägachsenmaschine ist als ein Hydrostatmotor wirksam, so dass das Hydrostatmodul ein stufenlos verstellbares hydrostatisches Getriebe bildet.

Die Steuerungsanordnung 1 nach Fig. 1 umfasst ein als elektromagnetisch steuerbares hydraulisches Proportionalventil ausgebildetes Positionsregelventil 2 mit einem Steuerkolben 3, durch dessen Axialstellung die an dem Stellkolben des Stellzylinders anliegende Stelldruckdifferenz einstellbar ist, und eine kraftschlüssige mechanische Rückführeinrichtung 4, über welche die Schwenklage des Jochs 5 auf den Steuerkolben 3 des Positionsregelventils 2 übertragbar ist.

Das Positionsregelventil 2 ist achsparallel zu dem Stellzylinder und radial beabstandet zu der Schwenkachse des Jochs 5 angeordnet. Die mechanische Rückführeinrichtung 4 umfasst einen axialbeweglich geführten Tastkolben 6 und eine als Schraubenfeder ausgebildete Rückkopplungsfeder 7, die koaxial und axial benachbart zu dem Positionsregelventil 2 angeordnet sind. Dabei liegt der Tastkolben 6 an einer exzentrisch zu der Schwenkachse an dem Joch 5 angeordneten Rückkopplungsfläche 8 an und steht über die Rückkopplungsfeder 7 mit dem Steuerkolben 3 des Positionsregelventils 2 in Wirkverbindung.

Die Rückkopplungsfläche 8, deren Kontur konvex ausgebildet und an die gewünschte Steuerungscharakteristik der Positionsregelung des Jochs 5 angepasst ist, ist an einem demontierbar und somit leicht austauschbar an dem Joch 5 befestigten Bauteil 9 ausgebildet. Der Tastkolben 6 steht über eine an seinem äußeren Ende 10 angeordnete ebene Gleitfläche 11 gleitbeweglich mit der Rückkopplungsfläche 8 des Jochs 5 in Kontakt und ist axial gleitbeweglich in einer Bohrung 14 einer die Lagerungen des Jochs 5 aufnehmenden Grundplatte 15 des Hydrostatmoduls geführt. Die Rückkopplungsfeder 7 ist einerseits in einer zentralen Sackbohrung 12 des Tastkolbens 6 und andererseits auf einem an dem Steuerkolben 3 des Positionsregelventils 2 zentrierten Federteller 13 geführt.

Vorliegend ist das Positionsregelventil 2 in Cartridgebauweise ausgeführt und in einem abgestuften Teil derselben Bohrung 14 angeordnet. Der Elektromagnet 16 des Positionsregelventils 2 ist auf der von dem Tastkolben 6 sowie der Rückkopplungsfeder 7 abgewandten Seite angeordnet und steht über einen Ankerstift 17 in Wirkverbindung mit dem Steuerkolben 3 des Positionsregelventils 2.

Wenn ausgehend von einer Ruhelage des Jochs 5 eine bestimmte Schwenklage eingestellt werden soll, so wird der Elektromagnet 16 mit einem bestimmten Steuerstrom bestromt und damit eine bestimmte Steuerkraft erzeugt, die über den Ankerstift 17 auf den Steuerkolben 3 des Positionsregelventils 2 übertragen wird. Hierdurch wird der Steuerkolben 3 gegen die Rückstellkraft der Rückkopplungsfeder 7 in Richtung des Tastkolbens 6 verschoben, und dieser gibt über seine Steuerkanten entsprechende Öffnungen zur Verbindung einer Hochdruckleitung und einer Niederdruckleitung mit den beiden Druckräumen des Stellzylinders frei. Hierdurch wird der Stellkolben des Stellzylinders axial verschoben und das Joch 5 über den Schwenkhebel in gewünschter Weise entsprechend dem eingezeichneten Schwenkpfeil 18 verschwenkt.

Diese Schwenkbewegung wird über den an der Rückkopplungsfläche 8 des Jochs 5 anliegenden Tastkolben 6 erfasst und über die dadurch stärker gespannte Rückkopplungsfeder 7 an den Steuerkolben 3 des Positionsregelventils 2 zurückgeführt. Dadurch wird der Steuerkolben 3 soweit in Richtung des Elektromagneten 16 zurückgeschoben und damit die auf den Stellkolben des Stellzylinders wirksame Stelldruckdifferenz reduziert, bis sich ein Kräftegleichgewicht zwischen der auf den Ankerstift 17 wirksamen Magnetkraft und der Federkraft der Rückkopplungsfeder 7 eingestellt hat.

Die Bauteile der Steuerungsanordnung 1, insbesondere die Kontur der Rückkopplungsfläche 8, die Federsteifigkeit der Rückkopplungsfeder 7 und die auf den Ankerstift 17 wirksame Magnetkraft sind derart aufeinander abgestimmt, dass die jeweilige Gleichgewichtsposition des Steuerkolbens 3 des Positionsregelventils 2 der gewünschten Schwenklage des Jochs 5 entspricht. Somit wird die einer bestimmten Magnetkraft bzw. dem entsprechenden Steuerstrom des Elektromagneten 16 zugeordnete Schwenkposition des Jochs 5 über die Rückführeinrichtung 4 selbsttätig mit hoher Präzision eingeregelt. Ungenauigkeiten, die sich bei den bekannten Steuerungsanordnungen durch die Rückführung der Stellposition des Stellzylinders auf das Positionsregelventil ergeben, sind bei der erfindungsgemäßen Steuerungsanordnung 1 demnach ausgeschlossen.

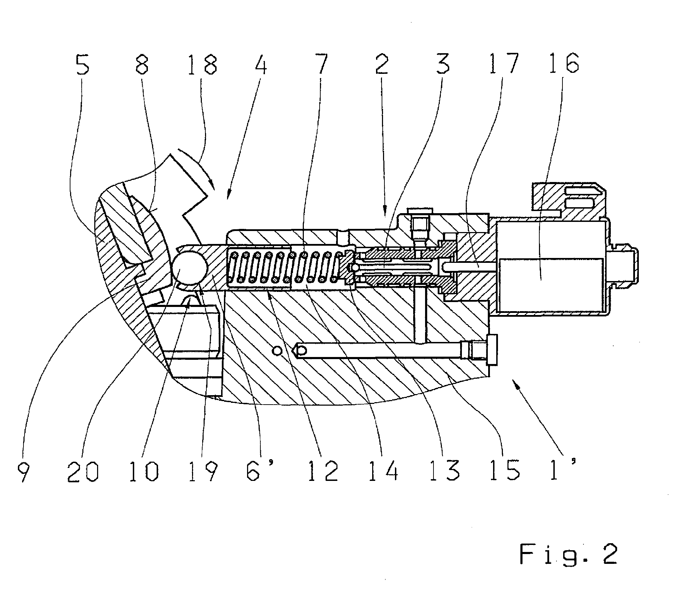

Eine erste Weiterbildung der Steuerungsanordnung 1' nach Fig. 2 unterscheidet sich bei sonst gleichem Aufbau von der Steuerungsanordnung 1 nach Fig. 1 dadurch, dass der Tastkolben 6' nunmehr über eine an seinem äußeren Ende 10 in einer Kalotte 19 drehbar gelagerte Kugel 20 wälzbeweglich mit der Rückkopplungsfläche 8 des Jochs 5 in Kontakt steht. Hierdurch ist eine reibungsärmere und damit exaktere Rückführung der Schwenklage des Jochs 5 auf das Positionsregelventil 2 gegeben.

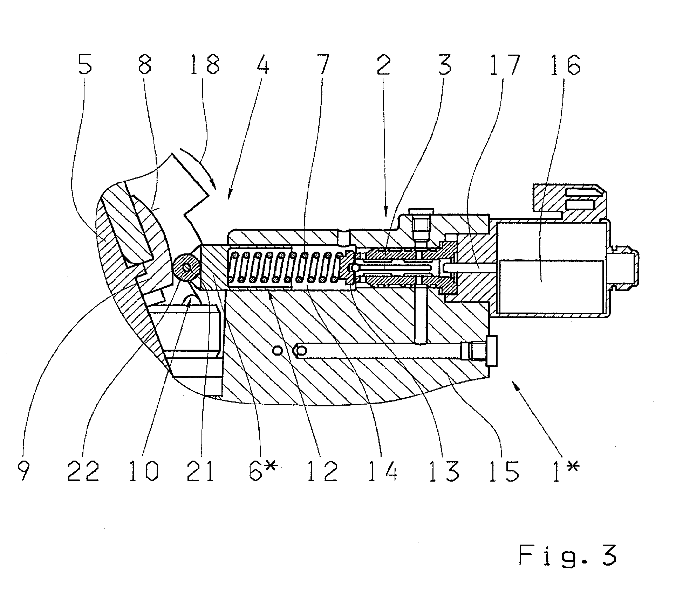

Eine zweite Weiterbildung der erfindungsgemäßen Steuerungsanordnung 1 * nach Fig. 3 unterscheidet sich bei sonst gleichem Aufbau von der Steuerungsanordnung 1 nach Fig. 1 dadurch, dass der Tastkolben 6* nunmehr über eine an seinem äußeren Ende 10 um eine achsparallel zu der Schwenkachse des Jochs 5 ausgerichtete Achse 21 drehbar gelagerte Rolle 22 rollbeweglich mit der Rückkopplungsfläche 8 des Jochs 5 in Kontakt steht. Auch hierdurch ergibt sich gegenüber dem gleitbeweglichen Kontakt zwischen dem Tastkolben 6 und der Rückkopplungsfläche 8 der Steuerungsanordnung 1 nach Fig. 1 eine reibungsärmere und damit exaktere Rückführung der Schwenklage des Jochs 5 auf das Positionsregelventil 2.

### Bezugszeichen

- 1: Steuerungsanordnung
- 1': Steuerungsanordnung
- 1*: Steuerungsanordnung
- 2: Positionsregelventil
- 3: Steuerkolben
- 4: Rückführeinrichtung
- 5: Joch
- 6: Tastkolben
- 6': Tastkolben
- 6*: Tastkolben
- 7: Rückkopplungsfeder
- 8: Rückkopplungsfläche
- 9: Bauteil
- 10: Äußeres Ende von Tastkolben 6, 6', 6*
- 11: Gleitfläche
- 12: Sackbohrung von Tastkolben 6, 6', 6*
- 13: Federteller
- 14: Bohrung
- 15: Grundplatte, gehäusefestes Bauteil
- 16: Elektromagnet
- 17: Ankerstift von Elektromagnet 16
- 18: Schwenkrichtung
- 19: Kalotte
- 20: Kugel
- 21: Achse
- 22: Rolle

## Patentansprüche

1. Hydrostatmodul mit einer Stellvorrichtung, wobei das Hydrostatmodul mindestens eine über die Verschwenkung eines Jochs (5) in ihrem Verdrängungsvolumen verstellbare Axialkolbenmaschine umfasst, mit einem radial beabstandet und tangential zu der Schwenkachse des Jochs (5) angeordneten hydraulischen Stellzylinder mit einem Stellkolben, der über einen Schwenkhebel mit dem Joch (5) in Wirkverbindung steht und an zwei entgegengerichteten Kolbenflächen mit einer Stelldruckdifferenz eines hydraulischen Druckmittels beaufschlagbar ist, und mit einer Steuerungsanordnung (1, 1', 1*), die ein als elektromagnetisch steuerbares hydraulisches Proportionalventil ausgebildetes Positionsregelventil (2) mit einem Steuerkolben (3) aufweist, durch dessen Axialstellung die an dem Stellkolben des Stellzylinders anliegende Stelldruckdifferenz einstellbar ist, und mit einer kraftschlüssigen mechanischen Rückführeinrichtung (4), über welche die Schwenklage des Jochs (5) auf den Steuerkolben (3) des Positionsregelventils (2) übertragbar ist, **dadurch gekennzeichnet, dass** das Positionsregelventil (2) achsparallel zu dem Stellzylinder und radial beabstandet zu der Schwenkachse des Jochs (5) angeordnet ist, und dass die Rückführeinrichtung (4) einen axialbeweglich geführten Tastkolben (6, 6', 6*) und eine als Schraubenfeder ausgebildete Rückkopplungsfeder (7) umfasst, die koaxial und axial benachbart zu dem Positionsregelventil (2) angeordnet sind, wobei der Tastkolben (6, 6', 6*) an einer exzentrisch zu der Schwenkachse an dem Joch (5) angeordneten Rückkopplungsfläche (8) anliegt und über die Rückkopplungsfeder (7) mit dem Steuerkolben (3) des Positionsregelventils (2) in Wirkverbindung steht.

2. Hydrostatmodul nach Anspruch 1, **dadurch gekennzeichnet, dass** die Kontur der Rückkopplungsfläche (8) konvex ausgebildet und an die gewünschte Steuerungscharakteristik der Positionsregelung des Jochs (5) angepasst ist.

3. Hydrostatmodul nach Anspruch 1 oder 2, **dadurch gekennzeichnet, dass** die Rückkopplungsfläche (8) an einem demontierbar an dem Joch (5) befestigten Bauteil (9) ausgebildet ist.

4. Hydrostatmodul nach einem der Ansprüche 1 bis 3, **dadurch gekennzeichnet, dass** der Tastkolben (6) über eine an seinem äußeren Ende (10) angeordnete ebene Gleitfläche (11) gleitbeweglich mit der Rückkopplungsfläche (8) des Jochs (5) in Kontakt steht.

5. Hydrostatmodul nach einem der Ansprüche 1 bis 3, **dadurch gekennzeichnet, dass** der Tastkolben (6') über eine an seinem äußeren Ende (10) in einer Kalotte (19) drehbar gelagerte Kugel (20) wälzbeweglich mit der Rückkopplungsfläche (8) des Jochs (5) in Kontakt steht.

6. Hydrostatmodul nach einem der Ansprüche 1 bis 3, **dadurch gekennzeichnet, dass** der Tastkolben (6*) über eine an seinem äußeren Ende (10) um eine achsparallel zu der Schwenkachse des Jochs (5) ausgerichtete Achse (21) drehbar gelagerte Rolle (22) rollbeweglich mit der Rückkopplungsfläche (8) des Jochs (5) in Kontakt steht.

7. Hydrostatmodul nach einem der Ansprüche 1 bis 6, **dadurch gekennzeichnet, dass** die Rückkopplungsfeder (7) einerseits in einer zentralen Sackbohrung (12) des Tastkolbens (6, 6', 6*) und andererseits auf einem an dem Steuerkolben (3) des Positionsregelventils (2) zentriert angeordneten Federteller (13) geführt ist.

8. Hydrostatmodul nach einem der Ansprüche 1 bis 7, **dadurch gekennzeichnet, dass** der Tastkolben (6, 6', 6*) axial gleitbeweglich in einer Bohrung (14) eines gehäusefesten Bauteils (15) geführt ist.

9. Hydrostatmodul nach einem der Ansprüche 1 bis 8, **dadurch gekennzeichnet, dass** das Positionsregelventil (2) in Cartridge-Bauweise ausgeführt ist und in einer Bohrung (14) eines gehäusefesten Bauteils (15) angeordnet ist.

10. Hydrostatmodul nach den Ansprüchen 8 und 9, **dadurch gekennzeichnet, dass** der Tastkolben (6, 6', 6*), die Rückkopplungsfeder (7) und das Positionsregelventil (2) in einer abgestuften Bohrung (14) einer die Lagerungen des Jochs (5) aufnehmenden Grundplatte (15) des Hydrostatmoduls angeordnet sind.

## Claims

1. Hydrostatic module with an adjusting device, the hydrostatic module comprising at least one axial piston machine adjustable in its displacement volume by the pivoting of a yoke (5), with a hydraulic adjusting cylinder arranged so as to be radially spaced apart from and tangentially to the pivot axis of the yoke (5) and having an adjusting piston which is operatively connected to the yoke (5) via a pivoting lever and which can be acted upon on two oppositely directed piston faces by an adjusting-pressure difference of a hydraulic pressure medium, and with a control arrangement (1, 1', 1*) which has a position-regulating valve (2) designed as an electromagnetically controllable hydraulic proportional valve and having a control piston (3), by means of the axial position of which the adjusting-pressure difference prevailing at the adjusting piston of the adjusting cylinder can be set, and with a non-positive mechanical return device (4), via which the pivoting position of the yoke (5) can be transferred to the control piston (3) of the position-regulating valve (2), **characterized in that** the position-regulating valve (2) is arranged axially parallel to the adjusting cylinder and so as to be radially spaced apart from the pivot axis of the yoke (5), and **in that** the return device (4) comprises an axially moveably guided touch-contact piston (6, 6', 6*) and a feedback spring (7) designed as a helical spring, which touch-contact piston and which feedback spring are arranged coaxially and axially adjacent to the position-regulating valve (2), the touch-contact piston (6, 6', 6*) bearing against a feedback face (8) arranged eccentrically to the pivot axis at the yoke (5) and being operatively connected via the feedback spring (7) to the control piston (3) of the position-regulating valve (2).

2. Hydrostatic module according to Claim 1, **characterized in that** the contour of the feedback face (8) is formed convexly and is adapted to the desired control characteristic of the position regulation of the yoke (5).

3. Hydrostatic module according to Claim 1 or 2, **characterized in that** the feedback face (8) is formed on a component (9) fastened demountably to the yoke (5).

4. Hydrostatic module according to one of Claims 1 to 3, **characterized in that** the touch-contact piston (6) is in slideably moveable contact, via a planar sliding face (11) arranged at its outer end (10), with the feedback face (8) of the yoke (5).

5. Hydrostatic module according to one of Claims 1 to 3, **characterized in that** the touch-contact piston (6') is in rollably moveable contact, via a ball (20) rotatably mounted in a spherical cap (19) at the outer end (10) of the said piston, with the feedback face (8) of the yoke (5).

6. Hydrostatic module according to one of Claims 1 to 3, **characterized in that** the touch-contact piston (6*) is in roll-moveable contact, via a roller (22) rotatably mounted at the outer end (10) of the said piston about an axis (21) oriented axially parallel to the pivot axis of the yoke (5), with the feedback face (8) of the yoke (5).

7. Hydrostatic module according to one of Claims 1 to 6, **characterized in that** the feedback spring (7) is guided, on the one hand, in a central blind bore (12) of the touch-contact piston (6, 6', 6*) and, on the other hand, on a spring plate (13) arranged, centred, on the control piston (3) of the position-regulating valve (2).

8. Hydrostatic module according to one of Claims 1 to 7, **characterized in that** the touch-contact piston (6, 6', 6*) is guided axially slideably moveably in a bore (14) of a housing-fixed component (15).

9. Hydrostatic module according to one of Claims 1 to 8, **characterized in that** the position-regulating valve (2) is designed in the cartridge type of construction and is arranged in a bore (14) of a housing-fixed component (15).

10. Hydrostatic module according to Claims 8 and 9, **characterized in that** the touch-contact piston (6, 6', 6*), the feedback spring (7) and the position-regulating valve (2) are arranged in a stepped bore (14) of a baseplate (15), accommodating the mountings of the yoke (5), of the hydrostatic module.

## Revendications

1. Module hydrostatique comprenant un dispositif de réglage, le module hydrostatique comportant au moins une machine à pistons axiaux dont le volume de refoulement peut être réglé par le biais du pivotement d'une culasse (5), comprenant un cylindre de réglage hydraulique disposé de manière espacée radialement et tangentiellement à l'axe de pivotement de la culasse (5), lequel cylindre de réglage est pourvu d'un piston de réglage qui est en liaison fonctionnelle avec la culasse (5) par le biais d'un levier pivotant et qui peut être sollicité par une différence de pression de réglage d'un fluide hydraulique sous pression sur deux surfaces de piston opposées, et comprenant un ensemble de commande (1, 1', 1*) qui comprend une soupape de réglage de position (2) réalisée sous forme de soupape proportionnelle hydraulique pouvant être commandée de manière électromagnétique et pourvue d'un piston de commande (3), au moyen de la position axiale duquel la différence de pression de réglage appliquée sur le piston de réglage du cylindre de réglage peut être ajustée, et comprenant un dispositif de rappel mécanique (4) par engagement par force, par le biais duquel la position de pivotement de la culasse (5) peut être transmise au piston de commande (3) de la soupape de réglage de position (2), **caractérisé en ce que** la soupape de réglage de position (2) est disposée de manière à ce que son axe soit parallèle au cylindre de réglage et de manière radialement espacée par rapport à l'axe de pivotement de la culasse (5), et **en ce que** le dispositif de rappel (4) comporte un piston palpeur (6, 6', 6*) guidé de manière axialement mobile et un ressort de rétroaction (7) réalisé sous forme de ressort hélicoïdal, lesquels sont disposés de manière coaxiale et axialement adjacente à la soupape de réglage de position (2), le piston palpeur (6, 6', 6*) s'appliquant contre une surface de rétroaction (8) disposée de manière excentrique par rapport à l'axe de pivotement sur la culasse (5) et étant en liaison fonctionnelle avec le piston de commande (3) de la soupape de réglage de position (2) par le biais du ressort de rétroaction (7).

2. Module hydrostatique selon la revendication 1, **caractérisé en ce que** le contour de la surface de rétroaction (8) est convexe et est adapté à la caractéristique de commande souhaitée du réglage de la position de la culasse (5).

3. Module hydrostatique selon la revendication 1 ou 2, **caractérisé en ce que** la surface de rétroaction (8) est réalisée sur un composant (9) fixé de manière démontable sur la culasse (5).

4. Module hydrostatique selon l'une quelconque des revendications 1 à 3, **caractérisé en ce que** le piston palpeur (6) est en contact avec la surface de rétroaction (8) de la culasse (5) de manière mobile par glissement par le biais d'une surface de glissement plane (11) disposée à son extrémité extérieure (10).

5. Module hydrostatique selon l'une quelconque des revendications 1 à 3, **caractérisé en ce que** le piston palpeur (6') est en contact avec la surface de rétroaction (8) de la culasse (5) de manière mobile par roulement par le biais d'une bille (20) montée à rotation dans une calotte (19) à son extrémité extérieure (10).

6. Module hydrostatique selon l'une quelconque des revendications 1 à 3, **caractérisé en ce que** le piston palpeur (6*) est en contact avec la surface de rétroaction (8) de la culasse (5) de manière mobile par roulement par le biais d'un rouleau (22) monté à rotation autour d'un axe (21) orienté parallèlement à l'axe de pivotement de la culasse (5) à son extrémité extérieure (10).

7. Module hydrostatique selon l'une quelconque des revendications 1 à 6, **caractérisé en ce que** le ressort de rétroaction (7) est guidé d'un côté dans un alésage borgne central (12) du piston palpeur (6, 6', 6*) et de l'autre côté sur une coupelle de ressort (13) disposée de manière centrée sur le piston de commande (3) de la soupape de réglage de position (2).

8. Module hydrostatique selon l'une quelconque des revendications 1 à 7, **caractérisé en ce que** le piston palpeur (6, 6', 6*) est guidé de manière axialement mobile par glissement dans un alésage (14) d'un composant (15) solidaire du boîtier.

9. Module hydrostatique selon l'une quelconque des revendications 1 à 8, **caractérisé en ce que** la soupape de réglage de position (2) est réalisée suivant une configuration de type à cartouche et est disposée dans un alésage (14) d'un composant (15) solidaire du boîtier.

10. Module hydrostatique selon les revendications 8 et 9, **caractérisé en ce que** le piston palpeur (6, 6', 6*), le ressort de rétroaction (7) et la soupape de réglage de position (2) sont disposés dans un alésage étagé (14) d'une plaque de base (15) recevant les supports de la culasse (5) du module hydrostatique.
